# EUROPEAN PATENT APPLICATION

(11) **EP 1 168 257 A1**
(43) Date of publication of application: **02.01.2002**
(21) Application number: 01202388.3
(22) Date of filing: 20.06.2001
(51) Int. Cl.: G07F 7/02, G07F 13/02

(54) **System and method for remotely effecting a transaction between a provider of goods and/or services and a customer**

(30) Priority: 20.06.2000 NL 1015476
(71) Applicant: N.V. Nederlandsche Apparatenfabriek NEDAP, NL-7141 DE Groenlo (NL)
(72) Inventor: Paashuis, Victor Jozef Bonifatius Johannes, 7132 EL Lichtenvoorde (NL)
(74) Representative: Prins, Adrianus Willem

(57) **Abstract**

A system for remotely effecting a transaction between a provider of goods and/or services and a customer comprises at least one facility for providing goods and/or services to customers and a remote central computer system provided with a central database which includes a customer file. The central computer system is arranged to communicate with a customer for receiving information provided by the customer and providing instructions to the customer, and is further arranged for remote control of the at least one facility, and for dealing with the financial aspect of the transaction. The central computer system is arranged such that, via a mobile telephone of the customer, it can at least be activated for the release of goods and/or services desired by the customer and for dealing with the financial aspect of the transaction.

## Description

This invention relates to a system for remotely effecting a transaction between a provider of goods and/or services and a customer, comprising at least one facility for providing goods and/or services to customers and a remote central computer system provided with a central database which includes a customer file, which central computer system is arranged to communicate with a customer for receiving information provided by the customer and providing instructions to the customer, and which central computer system is further arranged for remote control of the at least one facility, and for dealing with the financial aspect of the transaction. The invention is suitable in particular, though not exclusively, for use as fuel pump release system and payment system for self-service pumps. However, other applications are conceivable, such as, for instance, the supply of other products than fuel, or the operation of, for instance, barriers or other closures of, for instance, parking lots, garages, holiday parks, etc.

In the following description, the invention will be further elucidated, by way of example only, in connection with the supply of fuel to traffic participants such as motorists.

Creating a wide range of payment possibilities and payment convenience, combined with a minimum amount of infrastructure to be installed, enhances the profit and service possibilities of a gas station. The object of the present invention is to add to the existing package of possibilities an extra possibility which makes use of infrastructure accessible to everyone and not entailing any additional investment on the part of the proprietor or holder. What is involved here is the infrastructure for mobile telephony, by means of which voice and data connections can be established. More particularly, according to the invention, the central computer system is arranged such that, via a mobile telephone of the customer, it can at least be activated for the release of goods and/or services desired by the customer and for dealing with the financial aspect of the transaction. Many motorists are currently in the possession of a mobile telephone apparatus, so that a sufficiently high density is present.

It is noted that a system of the above-described type for the remote control of a fuel pump is known from U.S. Patent 5,586,050 (Makel). The known system is designed to control unmanned stations in remote locations to dispense liquid natural gas (LNG). To initiate the delivery of fuel, the user must present a credit card or a similar card to a card reader. The card reader is arranged in or adjacent the fuel pump and the information read is transmitted to a remote central computer. Thereupon, depending on the received information, the central computer can release the fuel pump for providing fuel to the customer. For the communication between the fuel pump device and the central computer, use can be made of a mobile telephony system. What is involved here, however, is exclusively a connection with the central computer which is to be automatically established by the fuel pump device itself with the aid of a transceiver which is part of the fuel pump device. The connection is not established until the fuel pump has been activated by the customer's credit card or the like. A customer's cellular phone, if any, does not play a role here, nor is it necessary for completing the transaction and for the communication with the customer.

U.S. Patent 5,950,872 (Webb) discloses a fuel dispensing device for airplanes. In this known device too, a telephone apparatus is arranged in case the pilot wants to get into touch with a central customer service. However, the fuel dispensing device is activated with the aid of a card reader to which the pilot must present a credit card or the like.

WO 90/12366 (Wise) describes a system for automatically dispensing fuel to vehicles such as trucks. Each vehicle has a board computer capable of communicating with a local computer in a fuel dispensing station. Communication proceeds automatically without intervention of the driver or an operator. To that end, each vehicle is provided with an antenna coil which, when the vehicle is properly positioned, can communicate with an antenna coil arranged, for instance, in the ground, which in turn is connected with the local computer. Communication between the board computer and the local computer can optionally proceed (partly) through other wireless communication means, for instance through a mobile telephone system. However, this involves automatic communication between computers and not the use of a mobile telephone apparatus by a customer to initiate fuel delivery and to pay therefor.

According to the invention, the identification of the customer who wants to fill up can be effected on the basis of his or her cellular phone number, which is known via the number registration system of the network. If this function has been blocked through a choice of the user, it can be asked with the aid of the interactive user interface, for instance in the form of a display at, on or in the pump and the keyboard of the mobile telephone, to enter this telephone number. For safety reasons, this number can optionally be called back automatically to confirm the correctness of the entry. Besides using a display, the user interface can, if desired, make use of spoken instructions via the customer's mobile phone and/or via a loudspeaker installed at, on or in the pump. It is also possible to communicate with the customer via the display of his or her cell phone. In that case, besides user instructions, other messages, for instance special offers, can be transmitted. Of course, this last also applies to the spoken communications.

To prevent a pump being remotely released by accident, the system can be expanded with a control number generated by the central computer, which is reproduced on the display of the pump and which is retransmitted by the customer via the key panel of the cellular phone. The control number is preferably a random number, which is generated anew with each fill-up operation and so, in principle, is different with each fill-up operation. Further, a personal, secret PIN code can be added to confirm the payment transaction. Also, it may be requested to enter additional information, such as, for instance, the mileage of the car.

An advantage of the system according to the invention is that for several gas stations, only one central processing system is necessary for remote release of the pumps and processing of the transactions.

The procedure for a fill-up operation with the aid of the release and payment system according to the invention, depending on the settings selected by the station holder, and after a customer has registered with the holder as a user of this service, is, for instance, as follows:
- I.: the customer drives his or her vehicle to a pump with the selected type of fuel.
- II.: with the aid of the mobile telephone apparatus, the customer enters a telephone number specified on the pump.
- III.: if the number recognition is not blocked, the telephone number of the customer is recognized by the central system and the customer details of the respective customer are retrieved and verified.
- IV.: the customer is asked to enter a random control number specified on the display of the pump, optionally supplemented with the mileage of the car, and then to break the connection.
- V.: after verification of the control number (if applicable), the system calls the customer back with the request to confirm the transaction, optionally supplemented with a quantity limit and/or a credit limit and/or fuel restriction, whereafter the respective pump is released and the vehicle can be filled up.
- VI.: after filling has been completed and the pump hose has been re-placed, the customer receives an SMS message or an e-mail and/or a receipt confirming the transaction.

It is noted that prior to step I the customer must first be registered with the proprietor of the gas stations. To that end, the customer details are entered in the central database. With regard to number recognition, it is noted that independently of any blocking of the number recognition function, operators of mobile telephony networks can recognize any mobile telephone apparatus so as to be able to charge the expenses of the call. In collaboration with an operator, therefore, the mobile telephone used can also be identified when the number recognition function is blocked. In that case, it is not necessary for the customer to enter the mobile telephone number once more via the key panel of the telephone apparatus. In the absence of collaboration with an operator of mobile telephony networks, or if, for instance, an additional check is desired, the customer can be asked to enter the mobile telephone number.

With regard to step IV, it is noted that this is an option which may apply fully, partly or not at all. Thus, it is possible not to work with the mileage and/or not to work with a control number. It is also possible not to break the connection but to ask the customer straightaway to confirm the transaction, as referred to in step V. To that end, use can be made, for instance, of the conventional OK key of a mobile telephone apparatus. Optionally, the customer may be asked beforehand to enter a pre-arranged PIN code via the key panel of the telephone apparatus.

After pressing the OK key or a similar operation, the pump is released and the vehicle can be filled up.

The quantity limit and/or credit limit mentioned in step V may be pre-arranged or be entered on site by the customer. The same applies to the fuel restriction and any other restrictions.

In step VI, the possibility is indicated of the customer receiving a receipt. To that end, the fuel pump device must then be provided with a suitable printer.

## Claims

1. A system for remotely effecting a transaction between a provider of goods and/or services and a customer, comprising at least one facility for providing goods and/or services to customers and a remote central computer system provided with a central database which includes a customer file, which central computer system is arranged to communicate with a customer for receiving information provided by the customer and providing instructions to the customer, and which central computer system is further arranged for remote control of the at least one facility, and for dealing with the financial aspect of the transaction, **characterized in that** the central computer system is arranged such that, via a mobile telephone of the customer, it can at least be activated for the release of goods and/or services desired by the customer and for dealing with the financial aspect of the transaction.

2. A system according to claim 1, **characterized in that** the at least one facility is a gas station having at least one fuel pump.

3. A system according to any one of the preceding claims, **characterized in that** information from the central computer is transferred to the customer via a display installed at, on or in the facility.

4. A system according to any one of the preceding claims, **characterized in that** information from the central computer is transferred to the customer via a loudspeaker installed at, on or in the facility.

5. A system according to any one of the preceding claims, **characterized in that** the mobile telephone of the customer, after breaking the connection, is automatically called back to confirm the correctness of information entered by the customer.

6. A system according to any one of the preceding claims 3 to 5, **characterized in that** to prevent unintended remote release of a facility, the central computer system is arranged to generate a control number which is represented on the display of the facility and which is sent back by the customer via the key panel of the mobile telephone of the customer.

7. A system according to one or more of the preceding claims, **characterized in that** for the confirmation of the payment transaction, the customer is asked by the central computer system to enter a personal secret PIN code via the mobile telephone apparatus.

8. A system according to one or more of the preceding claims, **characterized in that** the central computer is arranged to take a quantity limit and/or credit limit and/or a product or service restriction into account in the transactions.

9. A system according to one or more of the preceding claims, **characterized in that** the central computer is arranged to send the customer instructions, a confirmation of the transaction and/or other information through an SMS message and/or an e-mail and/or to provide a receipt to confirm the transaction.

10. A system according to any one of the preceding claims, **characterized in that** the central computer is arranged to identify the customer on the basis of his or her mobile telephone number.

11. A method for the remote control of a transaction between a provider of goods and/or services and a customer desiring the goods and/or services, **characterized in that** use is made of a system according to one or more of claims 1 to 10.
